# FASCICULE DE BREVET EUROPEEN

(11) **EP 2 662 280 B1**
(45) Date de publication et mention de la délivrance du brevet: **27.07.2016**
(21) Numéro de dépôt: 13305584.8
(22) Date de dépôt: 03.05.2013
(51) Int. Cl.: B64C 1/00, B64C 1/06

(54) **Poutre ventrale d'un aéronef**
Kielträger für Flugzeug
Aircraft keel beam

(30) Priorité: 09.05.2012 FR 1254203
(43) Date de publication de la demande: 13.11.2013
(73) Titulaire: Airbus Opérations SAS, 31060 Toulouse (FR)
(72) Inventeur: Durand, Yves, 31840 AUSSONNE (FR); Soula, Denis, 31300 TOULOUSE (FR); Colmagro, Jérôme, 31500 Toulouse (FR)
(74) Mandataire: Fantin, Laurent

(56) Documents cités:
- FR-A1- 2 901 240
- FR-A1- 2 936 489
- FR-A1- 2 943 944
- US-A- 4 635 882

## Description

La présente invention concerne une poutre ventrale d'un aéronef.

Un exemple d'une telle poutre ventrale est divulgué par le document FR 2 936 489 A1.

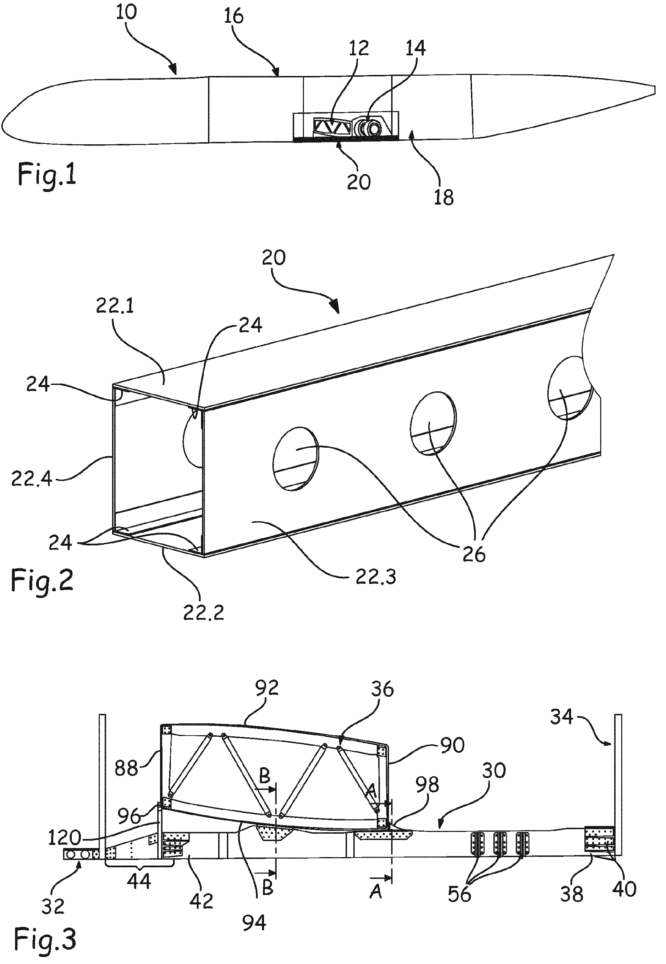

Sur la figure 1, on a représenté de manière schématique un fuselage 10 d'un aéronef avec un caisson central de voilure 12 assurant la liaison entre le fuselage et la voilure et une case de trains 14.

Pour la suite de la description, on entend par direction longitudinale la direction correspondant à la plus grande dimension du fuselage. Un plan transversal est un plan perpendiculaire à la direction longitudinale. L'avant de l'aéronef correspond au nez du fuselage et l'arrière à l'empennage.

De part et d'autre du caisson central de voilure 12 et/ou de la case de trains 14, le fuselage 10 comprend un premier tronçon 16 disposé à l'avant et un second tronçon 18 disposé à l'arrière, les deux tronçons 16 et 18 étant reliés par une poutre ventrale 20 disposée sous le caisson central de voilure 12.

Selon un mode de réalisation illustré sur la figure 2, une poutre ventrale 20 est métallique et a une section sensiblement rectangulaire avec un panneau supérieur 22.1, un panneau inférieur 22.2, deux panneaux latéraux 22.3 et 22.4 reliés par des cornières 24 à chaque angle.

Pour permettre cet assemblage, les panneaux latéraux 22.3 et 22.4 sont ajourés (orifices 26) pour autoriser l'accès aux fixations situées à l'intérieur de la poutre.

Le fait que les panneaux latéraux soient ajourés impacte nécessairement la résistance de la poutre si bien qu'il est nécessaire d'augmenter sa section pour assurer la reprise des efforts.

En variante, les éléments de la poutre sont réalisés en matériau composite. Même si cette solution permet de réduire la masse embarquée, elle ne l'optimise pas compte tenu de la géométrie des éléments constituant la poutre.

Selon un autre inconvénient, les bords libres des panneaux formant la poutre, notamment ceux prévus au niveau des angles inférieurs, sont exposés aux trajectoires de débris de pneus ou de jantes lorsque le train est sorti. Dans le cas de panneaux en matériau composite, un impact au niveau du chant du panneau peut avoir des conséquences importantes sur les caractéristiques mécaniques du panneau.

Selon un autre inconvénient, la poutre ventrale et le caisson central de voilure sont reliés par l'intermédiaire d'éclisses qui n'autorisent pas de légères déformations autour d'un axe parallèle à la direction longitudinale. Cette rigidité de la liaison entre le caisson central de voilure et la poutre ventrale conduit à augmenter les contraintes au niveau de la poutre ventrale provoquées par les efforts de flexion de la voilure.

La présente invention vise à remédier aux inconvénients de l'art antérieur.

Selon un premier objectif, l'invention propose une conception particulière de la poutre ventrale permettant d'optimiser la masse embarquée et de réduire les risques d'endommagement.

A cet effet, l'invention a pour objet une poutre ventrale qui se caractérise en ce qu'elle comprend d'une part un corps en U avec une base horizontale et deux parois latérales pleines, et d'autre part, un couvercle qui a une forme en U orientée de la même manière que le corps, avec une base en partie inférieure et des bords recourbés dont les extrémités sont orientées vers le haut de manière à ce que chaque bord recourbé comprend une face extérieure plaquée et fixée contre la face intérieure des extrémités des parois latérale du corps en U afin de délimiter avec le corps une section fermée, ledit couvercle comprenant des orifices permettant d'accéder à l'intérieur de la poutre ventrale.

Ainsi, selon l'invention, il n'existe aucun bord libre au niveau des angles inférieurs de la poutre ventrale ce qui tend à améliorer la résistance de la poutre vis-à-vis d'éventuels débris de pneus ou de jantes. De plus, il est possible d'optimiser le dimensionnement de la poutre en supprimant les orifices au niveau des parois latérales et en créant des orifices au niveau du couvercle.

De préférence, les parois latérales sont évasées.

Selon un autre objectif, l'invention vise à améliorer la liaison entre la poutre ventrale et le caisson central de voilure afin d'autoriser de légères déformations autour d'axes parallèles à la direction longitudinale.

A cet effet, la poutre ventrale comprend deux points d'ancrage disposés de part et d'autre de ladite poutre pour la relier au caisson central de voilure, chaque point d'ancrage comprenant au moins une éclisse métallique avec une première partie qui comprend des moyens de liaison avec la paroi latérale du corps de la poutre ventrale et une deuxième partie orientée vers l'extérieur de la poutre qui offre une surface d'appui pour le panneau inférieur du caisson central de voilure et qui est reliée à ce dernier par des moyens de liaison, les deux parties étant reliées par une zone de courbure apte à se déformer.

D'autres caractéristiques et avantages ressortiront de la description qui va suivre de l'invention, description donnée à titre d'exemple uniquement, en regard des dessins annexés sur lesquels :
- la figure 1 est une représentation schématique d'un fuselage selon l'art antérieur,
- la figure 2 est une représentation schématique illustrant en perspective une poutre ventrale selon l'art antérieur,
- la figure 3 est une vue latérale d'une poutre ventrale selon l'invention,

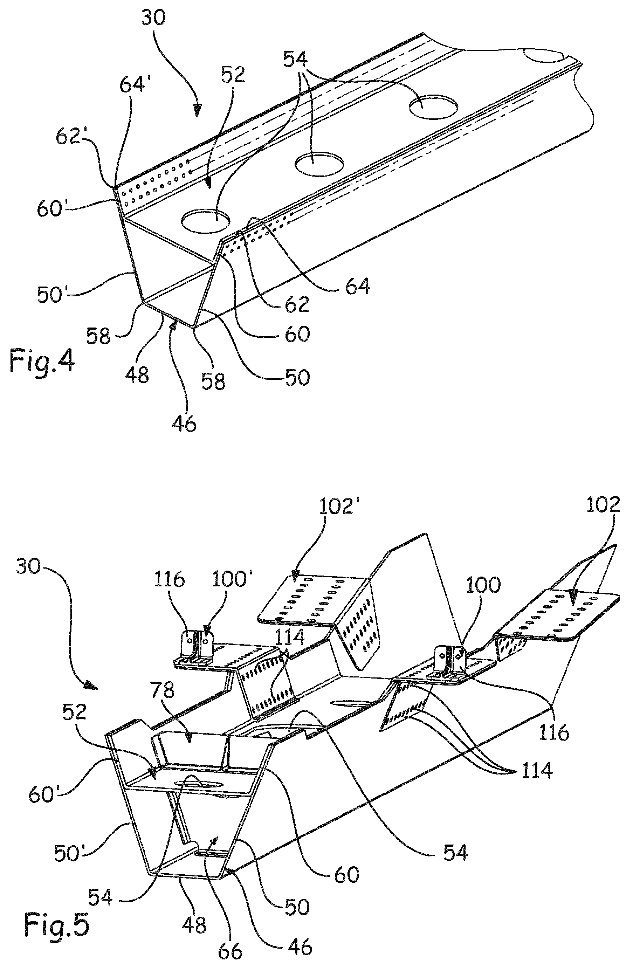

- la figure 4 est une représentation schématique d'une poutre ventrale selon l'invention sans renfort et sans éclisse,
- la figure 5 est une vue en perspective d'une poutre ventrale selon l'invention avec ses renforts et ses éclisses,
- la figure 6A est une coupe selon le plan transversal AA de la figure 3,
- la figure 6B est une coupe selon le plan transversal BB de la figure 3,
- la figure 7 est une vue en perspective d'un premier renfort selon l'invention,
- la figure 8 est une vue en perspective d'un second renfort selon l'invention, et
- la figure 9 est une vue illustrant en détails une zone de contact entre un caisson central de voilure et un cadre solidaire de la poutre ventrale.

Sur la figure 3, on a représenté en 30 une poutre ventrale d'un aéronef assurant la liaison entre une structure avant 32 et une structure arrière 34 d'un aéronef. Cette poutre ventrale 30 est également reliée à un caisson central de voilure 36. La poutre ventrale 30 comprend une extrémité arrière 38 reliée par l'intermédiaire d'éclisses 40 à la structure arrière 34 et une extrémité avant 42 reliée par l'intermédiaire d'un ensemble de renforts et d'éclisses 44 à la structure avant 32.

La poutre ventrale 30 est réalisée en matériau composite pour réduire la masse embarquée. En variante, elle pourrait être métallique et obtenue par pliage, par extrusion, par formage par pression, par formage par explosion,....

Selon l'invention, la poutre ventrale 30 comprend d'une part une première partie en U 46, appelée par la suite corps, avec une base 48 horizontale et deux parois latérales 50, 50' pleines, et d'autre part, une deuxième partie 52 appelée couvercle qui délimite avec le corps 46 une section fermée et qui comprend des orifices 54 permettant d'accéder à l'intérieur de la poutre ventrale 30. Différents éléments tels que des points d'ancrage, des ferrures pour des paliers de trappes de cases de trains 56, des éclisses, sont solidarisés à la poutre ventrale par des fixations.

Par pleine, on entend que les parois latérales n'ont pas de découpe à la manière du couvercle permettant d'avoir accès à l'intérieur de la poutre.

Contrairement à l'art antérieur, l'accès à l'intérieur de la poutre, notamment pour rendre les fixations accessibles, ne découle pas d'orifices ménagés au niveau des parois latérales. Ainsi, il est possible d'optimiser le dimensionnement de la poutre en supprimant les orifices au niveau des parois latérales et en créant des orifices au niveau du couvercle 52. De ce fait, les parois latérales 50, 50' du corps 46 deviennent travaillantes.

Avantageusement, les parois latérales 50, 50' sont évasées, la dimension entre les parois latérales augmentant en s'éloignant de la base 48. Ainsi, le corps présente une section transversale en forme d'auge. Par auge, on entend que le corps a une section transversale en forme de trapèze isocèle, la base la plus courte étant disposée en partie inférieure, la base supérieure étant ouverte. Cette configuration assure une meilleure reprise des efforts par la poutre ventrale.

Selon un autre avantage de l'invention, la base 48 et les parois latérales 50, 50' sont réalisées d'une seule pièce qui comprend au niveau des zones de jonction 58 des formes arrondies. Ainsi, contrairement à l'art antérieur, il n'existe aucun bord libre au niveau des angles inférieurs de la poutre ventrale ce qui tend à améliorer la résistance de la poutre vis-à-vis d'éventuels débris de pneus ou de jantes.

Selon une autre caractéristique de l'invention, le couvercle 52 a une forme en U orientée de la même manière que le corps 46, à savoir une base en partie inférieure et des bords recourbés 60, 60' dont les extrémités sont orientées vers le haut de manière à ce que chaque bord recourbé comprend une face extérieure plaquée et fixée contre la face intérieure des extrémités des parois latérales 50, 50'. Selon cette configuration, les deux extrémités des fixations utilisées pour solidariser le corps et le couvercle sont accessibles depuis l'extérieur de la poutre ventrale 30. Avantageusement, les chants 62, 62' des parois latérales sont disposés dans le prolongement respectivement des chants 64, 64' des bords recourbés 60, 60'.

Différents modes de réalisation sont envisageables pour réaliser le corps 46 et le couvercle 52 en matériau composite.

Les formes du couvercle et du corps autorisent pour chacun un mode de réalisation très simple par un moulage sur un poinçon.

Ainsi, selon un mode de réalisation, dans un premier temps, des nappes de fibres sont disposées sur un poinçon. Après la mise en place de toutes les nappes, un moule souple appelé également « caul-plate » est rapporté. Selon ce procédé, les deux faces du corps sont lisses, la première étant en contact avec le poinçon, l'autre avec le moule souple.

Selon une première variante, on peut utiliser des nappes de fibres sèches pour obtenir une préforme sèche qui est en suivant imprégnée de résine puis polymérisée.

Selon une autre variante, on peut utiliser des nappes de fibres pré-imprégnées d'une résine thermodurcissable, la préforme étant en suivant polymérisée.

Selon une autre variante, on peut utiliser des nappes de fibres pré-imprégnées d'une résine thermoplastique, la préforme étant ensuite consolidée.

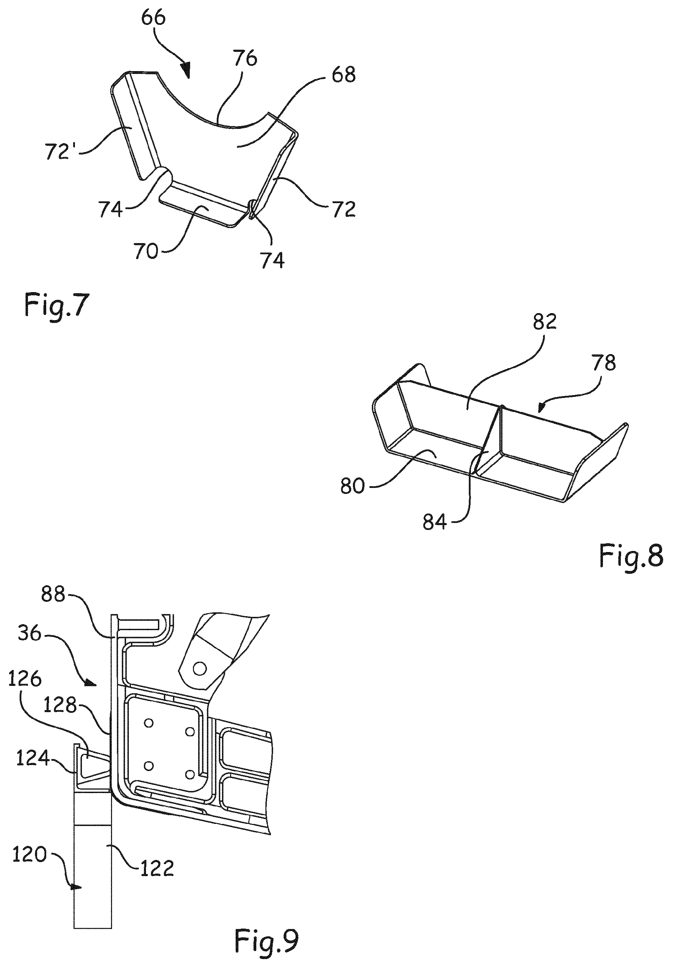

De préférence, la poutre comprend des renforts intérieurs 66 disposés entre le corps 46 et le couvercle 52. Chaque renfort intérieur 66 comprend une plaque 68 disposée dans un plan transversal, avec deux bords reliés aux parois latérales 50, 50' du corps 46. Cette solution permet de garantir l'écartement des parois latérales de la poutre ventrale et d'améliorer la stabilité de cette dernière. Selon un mode de réalisation illustré sur la figure 7, la plaque 68 comprend au niveau de trois côtés des bords recourbés à 90° par rapport à la plaque 68, un premier bord recourbé 70 dont une des faces est plaquée et fixée contre la base 48 du corps 46, un deuxième bord recourbé 72 dont une des faces est plaquée et fixée contre l'une des parois latérales 50 du corps et un troisième bord recourbé 72' dont une des faces est plaquée et fixée contre l'autre paroi latérale 50'.

Les bords recourbés 70, 72, 72' sont fixés au corps 46 par tous moyens appropriés.

De préférence, la plaque 68 comprend au niveau de ses angles inférieurs des découpes 74 pour permettre de plier les bords recourbés 70, 72, 72'. Avantageusement, la plaque 68 comprend au niveau de son bord supérieur une découpe 76 avec un grand rayon de courbure. Cette configuration permet d'augmenter la possibilité de déformation en flexion selon l'axe longitudinal de la poutre.

Selon un mode de réalisation, la poutre ventrale 30 comprend au moins un renfort extérieur 78 disposé à l'extérieur de la section fermée de la poutre et reliant les paroi latérales 50 et 50' du corps.

Comme illustré sur la figure 8, ce renfort extérieur 78 comprend une bande 80 en forme de U qui est plaquée et fixée contre la surface supérieure du couvercle 52, une première nervure 82 disposée dans un plan transversal reliée à la base et aux branches du U ainsi qu'une seconde nervure 84 perpendiculaire à la base du U et à la première nervure 82, à équidistance des branches du U.

Selon une autre caractéristique, la poutre ventrale 30 comprend une liaison avec le caisson central de voilure 36 qui autorise de légères déformations autour d'axes parallèles à la direction longitudinale.

Selon un mode de réalisation illustré sur la figure 3, un caisson central de voilure 36 comprend un panneau avant 88 perpendiculaire à la direction longitudinale, un panneau arrière 90 perpendiculaire à la direction longitudinale, un panneau supérieur 92 et un panneau inférieur 94 orienté vers la poutre ventrale.

Dans un plan longitudinal et vertical, le panneau inférieur 94 est courbe et son bord avant 96 est plus haut que son bord arrière 98.

La liaison entre la poutre ventrale et le caisson central de voilure comprend deux premiers points d'ancrage 100, 100' de part et d'autre de ladite poutre ventrale au niveau du bord arrière 98 et deux seconds points d'ancrage 102, 102' de part et d'autre de ladite poutre ventrale au niveau d'une zone médiane du panneau inférieur 94 (la zone médiane étant approximativement équidistante du bord avant 96 et du bord arrière 98).

Les points d'ancrage 100, 100' sont symétriques par rapport à un plan médian longitudinal PM de la poutre ventrale. Dans la mesure où ils sont symétriques, seul le point d'ancrage 100 est décrit.

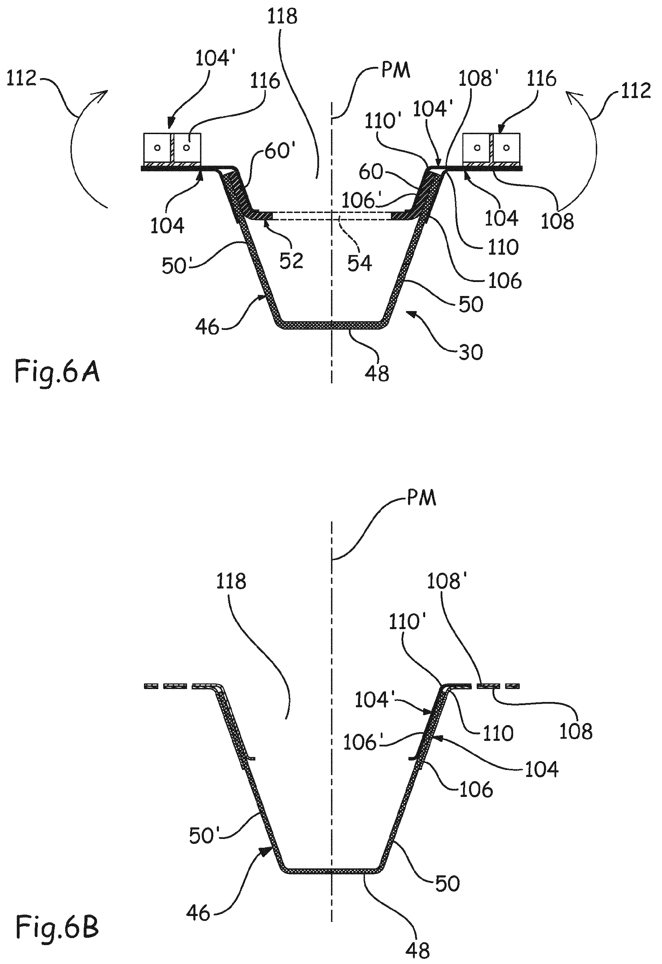

Comme illustré sur la figure 6A, le point d'ancrage 100 comprend au moins une éclisse 104 métallique avec une première partie 106 qui comprend des moyens de liaison avec la partie supérieure de paroi latérale 50 du corps 46 de la poutre ventrale et une deuxième partie 108 orientée vers l'extérieur de la poutre qui offre une surface d'appui pour le panneau inférieur 94 du caisson central de voilure et qui est reliée à ce dernier par des moyens de liaison. Les deux parties 106 et 108 sont reliées par une zone de courbure 110 qui est apte à se déformer autour d'un axe parallèle à la direction longitudinale, comme indiqué schématiquement par les flèches 112, afin de favoriser la flexion de la voilure. Les éclisses sont réalisées en métal pour obtenir une limite élastique plus élevée qu'un matériau composite.

De préférence, le point d'ancrage 100 comprend deux éclisses 104, 104' plaquées l'une contre l'autre au niveau des deuxièmes parties 108, 108' et dont les premières parties 106, 106' sont disposées de part et d'autre de la partie supérieure de la paroi latérale 50 du corps ou de la partie supérieure de la paroi latérale 50 du corps et du bord recourbé 60 du couvercle. Ainsi, au niveau des premières parties 106 et 106', les éclisses 104, 104' enserrent la partie supérieure de la paroi latérale 50 du corps ou la partie supérieure de la paroi latérale 50 du corps et le bord recourbé 60 du couvercle. Des fixations 114 sont prévues pour assurer la liaison entre la poutre ventrale 30 et les éclisses 104, 104'. Ces fixations 114 traversent les éclisses 104, 104', la paroi latérale 50 et le bord recourbé 60 du couvercle.

Comme illustré sur la figure 6B, les points d'ancrage 102 et 102' sont symétriques par rapport au plan médian longitudinal PM de la poutre ventrale et sont conçus de la même manière que les points d'ancrage 100 et 100'.

En l'absence de couvercle à leur niveau, les éclisses 104 et 104' des points d'ancrage 102 et 102' n'enserrent que la paroi latérale 50 ou 50' du corps. Comme illustré sur la figure 6A, les points d'ancrage 100 et 100' comprennent chacun une équerre 116 contre laquelle peut prendre appui le panneau arrière 90 du caisson central de voilure.

Selon un autre avantage de l'invention, la poutre ventrale 30 comprend un évidemment 118 entre les points d'ancrage 100 et 100' ou 102 et 102' qui favorise la flexion de la voilure.

Selon un autre aspect de l'invention, l'extrémité avant 42 de la poutre ventrale 30 est reliée par l'intermédiaire d'éclisses 44 à un cadre 120 appelé cadre demi-lune avant.

Selon un mode de réalisation illustré sur la figure 9, le cadre demi-lune avant 120 comprend une paroi 122 disposée dans un plan transversal, à l'avant du panneau avant 88 du caisson central de voilure. Le bord supérieur 124 de la paroi 122 comprend au niveau de sa face orientée vers le caisson central de voilure un joint d'étanchéité 126 en contact avec le panneau avant 88 du caisson central de voilure. Lors de la flexion de la voilure, ce joint d'étanchéité 126 frotte contre un clinquant 128 collé contre la face extérieure du panneau avant 88.

## Revendications

1. Poutre ventrale destinée à être reliée à un caisson central de voilure (36) d'un aéronef et à assurer la liaison entre une structure avant (32) et une structure arrière (34) d'un aéronef, ladite poutre ventrale **se caractérisant en ce qu'**elle comprend d'une part un corps (46) en U avec une base (48) horizontale et deux parois latérales (50, 50') pleines, et d'autre part, un couvercle (52) qui a une forme en U orientée de la même manière que le corps (46), avec une base en partie inférieure et des bords recourbés (60, 60') dont les extrémités sont orientées vers le haut de manière à ce que chaque bord recourbé comprend une face extérieure plaquée et fixée contre la face intérieure des parois latérales (50, 50') afin de délimiter avec le corps (46) une section fermée, ledit couvercle comprenant des orifices (54) permettant d'accéder à l'intérieur de la poutre ventrale (30).

2. Poutre ventrale selon la revendication 1, **caractérisée en ce que** les parois latérales (50, 50') sont évasées, la dimension entre les parois latérales augmentant en s'éloignant de la base (48).

3. Poutre ventrale selon la revendication 1 ou 2, **caractérisée en ce qu'**elle comprend deux points d'ancrage (100, 100', 102, 102') disposés de part et d'autre de ladite poutre pour la relier au caisson central de voilure.

4. Poutre ventrale selon la revendication 3, **caractérisée en ce que** chaque point d'ancrage (100, 100', 102, 102') comprend au moins une éclisse (104) métallique avec une première partie (106) qui comprend des moyens de liaison avec la paroi latérale (50) du corps (46) de la poutre ventrale et une deuxième partie (108) orientée vers l'extérieur de la poutre qui offre une surface d'appui pour le panneau inférieur (94) du caisson central de voilure et qui est destinée à être reliée à ce dernier par des moyens de liaison, les deux parties (106, 108) étant reliées par une zone de courbure (110) apte à se déformer.

5. Poutre ventrale selon la revendication 4, **caractérisée en ce que** chaque point d'ancrage (100, 100', 102, 102') comprend deux éclisses (104, 104') plaquées l'une contre l'autre au niveau des deuxièmes parties (108, 108') et dont les premières parties (106, 106') sont disposées de part et d'autre de la partie supérieure de la paroi latérale (50) du corps ou de la partie supérieure de la paroi latérale (50) du corps et du couvercle (52).

6. Poutre ventrale selon l'une quelconque des revendications 3 à 5, **caractérisée en ce que** les points d'ancrage (100, 100', 102, 102') sont symétriques par rapport à un plan médian longitudinal de la poutre ventrale.

7. Poutre ventrale selon l'une quelconque des revendications précédentes, **caractérisée en ce que** la poutre comprend des renforts intérieurs (66) disposés entre le corps (42) et le couvercle (52), chacun d'eux comprenant une plaque (68) disposée dans un plan transversal avec deux bords reliés aux parois latérales (50, 50') du corps (46).

8. Poutre ventrale selon la revendication 7, **caractérisée en ce que** la plaque (68) comprend au niveau de son bord supérieur une découpe (76) avec un grand rayon de courbure.

9. Poutre ventrale selon l'une quelconque des revendications précédentes, **caractérisée en ce qu'**elle comprend au moins un renfort extérieur (78) disposé à l'extérieur de la section fermée de la poutre et reliant les paroi latérales (50, 50') du corps.

## Patentansprüche

1. Kielträger, der dazu bestimmt ist, mit dem Flügelmittelkasten (36) eines Luftfahrzeugs verbunden zu werden und die Verbindung zwischen einer vorderen Struktur (32) und einer hinteren Struktur (34) eines Luftfahrzeugs zu gewährleisten, wobei der Kielträger **dadurch gekennzeichnet ist, dass** dieser einerseits einen U-förmigen Grundkörper (46) mit einer horizontalen Basis (48) und zwei Seitenwänden (50, 50') aus Vollmaterial aufweist, und andererseits eine Abdeckung (52) aufweist, die U-förmig ausgebildet ist und auf die gleiche Weise wie der Grundkörper (46) ausgerichtet ist, mit einer Basis im unteren Bereich und mit gebogenen Rändern (60, 60'), deren Enden nach oben ausgerichtet sind, so dass jeder gekrümmte Rand eine Außenseite aufweist, die an der Innenseite der Seitenwände (50, 50') angebracht und befestigt ist, um mit dem Grundkörper (46) einen geschlossenen Querschnitt zu begrenzen, wobei die Abdeckung Öffnungen (54) aufweist, die einen Zugang zum Inneren des Kielträgers (30) ermöglichen.

2. Kielträger nach Anspruch 1, **dadurch gekennzeichnet, dass** sich die Seitenwände (50, 50') ausweiten, wobei sich das Maß zwischen den Seitenwänden mit zunehmender Entfernung von der Basis (48) vergrößert.

3. Kielträger nach Anspruch 1 oder 2, **dadurch gekennzeichnet, dass** dieser zwei Verankerungspunkte (100, 100', 102, 102') aufweist, die auf beiden Seiten des Kielträgers angeordnet sind, um diesen mit dem Flügelmittelkasten zu verbinden.

4. Kielträger nach Anspruch 3, **dadurch gekennzeichnet, dass** jeder Verankerungspunkt (100, 100', 102, 102') wenigstens eine metallische Lasche (104) aufweist, mit einem ersten Teil (106) der Verbindungsmittel mit der Seitenwand (50) des Grundkörpers (46) des Kielträgers aufweist, und mit einem zweiten Teil (108), der vom Kielträger aus nach außen weist und eine Stützoberfläche für die untere Platte (94) des Flügelmittelkastens bietet und der dazu bestimmt ist, mit letzteren mit Hilfe von Verbindungsmitteln verbunden zu werden, wobei die beiden Teile (106, 108) durch eine verformbare Verbiegungszone (110) verbunden sind.

5. Kielträger nach Anspruch 4, **dadurch gekennzeichnet, dass** jeder Verankerungspunkt (100, 100', 102, 102') zwei Laschen (104, 104') aufweist, die im Bereich der zweiten Teile (108, 108') aneinander liegen und deren ersten Teile (106, 106') beidseits des oberen Bereichs der Seitenwand (50) des Grundkörpers oder des oberen Bereichs der Seitenwand (50) des Grundkörpers und der Abdeckung (52) angeordnet sind.

6. Kielträger nach einem der Ansprüche 3 bis 5, **dadurch gekennzeichnet, dass** die Verankerungspunkte (100, 100', 102, 102') bezüglich einer mittleren Längsebene symmetrisch sind.

7. Kielträger nach einem der vorherigen Ansprüche, **dadurch gekennzeichnet, dass** der Kielträger innere Verstärkungen (66) aufweist, die zwischen dem Grundkörper (42) und der Abdeckung (52) angeordnet sind und die jeweils eine Platte (68) aufweisen, die in einer Querebene angeordnet ist und zwei mit den Seitenwänden(50, 50') des Grundkörpers (46) verbundene Ränder aufweist.

8. Kielträger nach Anspruch 7, **dadurch gekennzeichnet, dass** die Platte (68) im Bereich ihres oberen Randes einen Ausschnitt (76) mit einem großen Krümmungsradius aufweist.

9. Kielträger nach einem der vorhergehenden Ansprüche, **dadurch gekennzeichnet, dass** dieser wenigstens eine äußere Verstärkung (78) aufweist, die außerhalb des geschlossenen Querschnitts des Kielträgers angeordnet ist und die die Seitenwände (50, 50') des Grundkörpers verbindet.

## Claims

1. Keel beam intended to be connected to a central wing box (36) of an aircraft and to ensure the connection between a front structure (32) and a rear structure (34) of an aircraft, said keel beam being **characterized in that** it comprises, on the one hand, a U-shaped body (46) with a horizontal base (48) and two solid lateral walls (50, 50'), and on the other hand, a U-shaped cover (52) oriented in the same manner as the body (46), with a base in the lower portion and curved edges (60, 60') whose ends are oriented upward so that each curved edge comprises an outer surface flattened and fixed against to the inner surface of the lateral walls (50, 50') in order to define with the body (46) a closed section, said cover comprising openings (54) for accessing the inside of the keel beam (30).

2. Keel beam according to claim 1, **characterized in that** the lateral walls (50, 50') are flared, the dimension between the lateral walls increasing in a direction away from the base (48).

3. Keel beam according to claim 1 or 2, **characterized in that** it comprises two anchoring points (100, 100', 102, 102') arranged on both sides of said beam to connect the latter to the central wing box.

4. Keel beam according to claim 3, **characterized in that** each anchoring point (100, 100', 102, 102') comprises at least one metal splice plate (104) with a first portion (106) which comprises means of connection with the lateral wall (50) of the body (46) of the keel beam and a second portion (108) oriented outward of the beam which offer a support surface for the lower panel (94) of the central wing box and which is connected to the lower panel (94) of the central wing box and which is intended to be connected to this last one by means of connection, the two portions (106, 108) being connected by a zone of curvature (110) adapted to be deformed.

5. Keel beam according to claim 4, **characterized in that** each anchoring point (100, 100', 102, 102') comprises two splice plates (104, 104') flattened against one another in the area of the second portions (108, 108') and whose first portions (106, 106') are arranged on both sides of the upper portion of the lateral portion (50) of the body or of the upper portion of the lateral wall (50) of the body and of the cover (52).

6. Keel beam according to any of claims 3 to 5, **characterized in that** the anchoring points (100, 100', 102, 102') are symmetrical with respect to a longitudinal median plane of the keel beam.

7. Keel beam according to any of the previous claims, **characterized in that** the beam comprises inner reinforcements (66) arranged between the body (42) and the cover (52), each of them comprising a plate (68) arranged along a transverse plane with two edges connected to the lateral walls (50, 50') of the body (46).

8. Keel beam according to claim 7, **characterized in that** the plate (68) comprises in the area of the upper edge thereof a cutout (76) with a large radius of curvature.

9. Keel beam according to any of the previous claims, **characterized in that** it comprises at least one outer reinforcement (78) arranged outside the closed section of the beam and connecting the lateral walls (50, 50') of the body.
